# EUROPÄISCHE PATENTANMELDUNG

(11) **EP 3 461 696 A1**
(43) Veröffentlichungstag der Anmeldung: **03.04.2019**
(21) Anmeldenummer: 17193371.6
(22) Anmeldetag: 27.09.2017
(51) Int. Cl.: B60R 22/46, B21D 19/12, B60R 22/195, B60R 21/264, B21D 19/16

(54) **VERFAHREN UND VORRICHTUNG ZUR MONTAGE EINES GASGENERATORS**

(71) Anmelder: TRW Automotive GmbH, 73553 Alfdorf (DE); TRW Polska Sp.z.o.o., 42-200 Czestochowa (PL)
(72) Erfinder: Staszalek, Krzysztof, 42-400 Czestochowa (PL)
(74) Vertreter: ZF TRW Patentabteilung

(57) **Zusammenfassung**

Bei einem Verfahren zur Montage eines Gasgenerators (14) in einem Gehäuse (12) wird der Gasgenerator (14) in eine Öffnung (15) des Gehäuses (12) eingeschoben und ein Rand (26) der Öffnung (15) des Gehäuses (12) wird axial und radial in Richtung zum Gasgenerator (14) in einem ersten Umformschritt umgeformt. Ein weiteres Umformen des Randes (26) der Öffnung (15) des Gehäuses (12) zumindest axial in Richtung zum Gasgenerator (14) erfolgt in einem separaten zweiten Umformschritt. Das Verfahren wird in einer Vorrichtung zur Montage eines Gasgenerators (14) in einem Gehäuse (12) durchgeführt, die ein erstes Stempelwerkzeug aufweist, mit dem der erste Umformschritt durchgeführt wird, und ein zweites, in seiner Form vom ersten Stempelwerkzeug verschiedenes Stempelwerkzeug, mit dem der zweite Umformschritt durchgeführt wird, um die Baugruppe aus Gehäuse (12) und Gasgenerator (14) zu bilden.

## Beschreibung

Die Erfindung betrifft ein Verfahren zur Montage eines Gasgenerators in einem Gehäuse sowie eine Vorrichtung zur Montage des Gasgenerators im Gehäuse.

Gasgeneratoren werden in Fahrzeugen an unterschiedlichen Stellen eingesetzt. Beispielsweise werden sie verwendet, um die Antriebskraft für einen Gurtstraffer zu liefern, indem das vom Gasgenerator erzeugte Gasvolumen ein kraft-übertragendes Bauteil in einem Gehäuse bewegt. Hierzu sollte der Gasgenerator fest mit dem Gehäuse verbunden sein.

Es ist Aufgabe der Erfindung, einen Gasgenerator schnell und einfach in einem Gehäuse sicher zu fixieren: Insbesondere ist es Aufgabe der Erfindung ein Verfahren und eine Vorrichtung hierfür zur Verfügung zu stellen.

Diese Aufgabe wird mit einem Verfahren mit den Schritten gelöst:
- Einschieben des Gasgenerators in eine Öffnung des Gehäuses,
- Umformen eines Randes der Öffnung des Gehäuses axial und radial in Richtung zum Gasgenerator in einem ersten Umformschritt, und
- weiteres Umformen des Randes der Öffnung des Gehäuses zumindest axial in Richtung zum Gasgenerator in einem separaten zweiten Umformschritt.

Das Umformen des Randes der Öffnung des Gehäuses in insbesondere nur zwei Schritten sorgt für eine schnelle und damit kostengünstige Fertigung. Gleichzeitig erlaubt das Anwenden eines separaten zweiten Umformschrittes eine flexiblere Formgebung des Randes des Gehäuses und somit eine bessere Anpassung an die Form des Gasgenerators. Dadurch kann insbesondere eine feste und sichere Verbindung des Gasgenerators mit dem Gehäuse erreicht werden.

Vorzugsweise werden stets genau die zwei beschriebenen Umformschritte durchgeführt, d. h., kein dritter Umformschritt ist nötig.

Insbesondere ist es möglich, dass der erste Umformschritt mit einem ersten Stempelwerkzeug und der zweite Umformschritt mit einem zweiten Stempelwerkzeug durchgeführt wird. Auf diese Weise lässt sich die Verformung des Materials des Gehäuses sehr genau beeinflussen. Insbesondere kann dadurch der Formschluss zwischen dem Gehäuse und dem Gasgenerator verbessert bzw. optimiert werden und somit der Gasgenerator sicher im Gehäuse fixiert werden.

Beide Umformschritte können in derselben Vorrichtung mit unterschiedlichen Stempelwerkzeugen durchgeführt werden. Zwischen den Umformschritten kann das Stempelwerkzeug ausgetauscht werden. Der Austausch der Stempelwerkzeuge wird vorzugsweise automatisch von der Vorrichtung durchgeführt. Somit müssen lediglich die Stempelwerkzeuge individuell angepasst werden, was Aufwand und Kosten reduziert.

In einer weiteren Ausführungsform kann die Vorrichtung zumindest zwei Werkzeugaufnahmen aufweisen, wobei in der ersten Werkzeugaufnahme das Stempelwerkzeug für den ersten Umformschritt angeordnet ist und in der zweiten Werkzeugaufnahme, das Stempelwerkzeug für den zweiten Umformschritt angeordnet ist.

Vorzugsweise wird das Stempelwerkzeug in beiden Umformschritten jeweils nur in axialer Richtung verfahren, sodass das Umformen in einem Stauchprozess geschieht. Die unterschiedliche Verformung lässt sich einfach durch unterschiedliche Ausbildungen der axialen Endfläche des jeweiligen Stempelwerkzeugs erreichen.

In einer möglichen Variante weist ein Umfangsrand des Gasgenerators eine umlaufende, im Wesentlichen radiale Schulter auf. Der Rand der Öffnung des Gehäuses wird im zweiten Umformschritt so verformt, dass der Rand der Öffnung die Schulter in Radialrichtung übergreift und insbesondere an dieser flächig anliegt, womit der Gasgenerator in axialer Richtung gegen eine Verschiebung gegenüber dem Gehäuse gesichert ist.

Dabei kann im ersten Umformschritt der Rand der Öffnung des Gehäuses gegen einen von der Schulter ausgehenden Abschnitt des Gasgenerators mit verringertem Querschnitt gedrückt werden, sodass insbesondere ein Formschluss erreicht wird.

Dieser Formschluss kann im zweiten Umformschritt verbessert werden, indem der Kontakt mit der Schulter und/oder mit dem Abschnitt mit verringertem Querschnitt verbessert wird. Beispielsweise kann der Rand der Öffnung des Gehäuses an seinem nun radial innen liegenden Abschnitt in etwa die Form des Übergangs zwischen dem Abschnitt des Gasgenerators mit verringertem Querschnitt zu der Schulter des Gasgenerators annehmen.

Generell gesagt ist es vorteilhaft, wenn im zweiten Umformschritt der Rand der Öffnung des Gehäuses weiter radial einwärts verformt wird als im ersten Umformschritt.

Dabei ist es auch möglich, mit dem zweiten Umformschritt eine Nut zwischen dem Abschnitt des Gasgenerators mit verringertem Querschnitt und einer die Gehäuseöffnung umgebenden Gehäusefläche zu erzeugen.

Das Gehäuse kann beispielsweise vor dem Umformen rohrförmig ausgebildet sein, und ein offenes Einsteckende aufweisen, in dem die Öffnung ausgebildet ist. Zudem kann das Gehäuse einen Boden oder eine Verjüngung aufweisen, an dem oder der insbesondere der Gasgenerator anliegt. Als konkretes Beispiel kann es sich bei dem Gehäuse um ein Strafferrohr eines Gurtstraffers handeln, an dessen strafferfernem Ende der Gasgenerator eingesetzt wird.

Die oben genannte Aufgabe wird auch mit einer Vorrichtung mit den Merkmalen des Anspruchs 9 gelöst. Bei dieser Vorrichtung zur Montage eines Gasgenerators in einem Gehäuse, der in eine Öffnung des Gehäuses eingesetzt ist, ist ein erstes Stempelwerkzeug vorgesehen, das so ausgebildet ist, dass es in einem ersten Umformschritt einen Rand der Öffnung des Gehäuses in axialer und radialer Richtung zum Gasgenerator hin umformt. Außerdem ist ein zweites, in seiner Form vom ersten Stempelwerkzeug verschiedenes Stempelwerkzeug vorgesehen, das so ausgebildet ist, dass es in einem zweiten Umformschritt den Rand der Öffnung des Gehäuses zumindest in axialer Richtung zum Gasgenerator hin umformt. Die beiden, insbesondere auswechselbaren Stempelwerkzeuge lassen sich einfach an unterschiedliche Aufgaben anpassen, ohne dass Änderungen an anderen Bauteilen der Vorrichtung erforderlich wären.

Zumindest das erste Stempelwerkzeug hat beispielsweise einen axial vorstehenden, in Umfangsrichtung umlaufenden Vorsprung, an dessen radialer Innenseite eine Kontaktfläche ausgebildet ist, die während des Umformschritts mit dem Gehäuse in Kontakt kommt. Diese Kontaktfläche bewirkt normalerweise einen Großteil der Materialumformung des Gehäuses. Ein radialer äußerer Abschnitt des Vorsprungs kann insbesondere eine Verdrängung des Materials des Gehäuses radial auswärts verhindern.

Das zweite Stempelwerkzeug ist beispielsweise so ausgebildet, dass es einen zweiten umfangsmäßig umlaufenden Vorsprung aufweist, der weiter radial innen liegt als der erste Vorsprung. Dieser zweite Vorsprung bewirkt dann eine weitere Umformung des Gehäuses in einem Bereich näher zum Gasgenerator, wobei beispielsweise der bereits beschriebene Formschluss zwischen dem Rand der Öffnung des Gehäuses und der Schulter und/oder dem Abschnitt mit verringertem Durchmesser des Gasgenerators erreicht oder verbessert wird. Bei diesem Umformschritt kann auch die Nut zwischen dem radial äußeren Gehäuserand und dem Gasgenerator erzeugt werden.

Der zweite umfangsmäßig umlaufende Vorsprung ist insbesondere beim ersten Stempelwerkzeug nicht vorhanden.

Das erste und das zweite Stempelwerkzeug unterscheiden sich in einer bevorzugten Ausführungsform im Wesentlichen nur durch den zweiten Vorsprung. In einer Ausführungsform kann der zweite Vorsprung derart ausgebildet sein, dass die Kontaktfläche des zweiten Stempelwerkzeugs eine Stufenform aufweist.

Mittels des oben beschriebenen Verfahrens in der oben beschriebenen Vorrichtung lässt sich eine Baugruppe aus Gasgenerator und Gehäuse fertigen, bei der es sich insbesondere um einen Gurtstraffer handeln kann.

Die Erfindung wird nachfolgend anhand eines Ausführungsbeispiels mit Bezug auf die beigefügten Zeichnungen näher beschrieben. In den Zeichnungen zeigen:
- Figur 1 eine schematische perspektivische Darstellung einer erfindungsgemäßen Baugruppe aus einem Gehäuse und einem Gasgenerator, vor dem ersten Umformschritt des erfindungsgemäßen Verfahrens;
- Figur 2 eine schematische Darstellung einer erfindungsgemäßen Vorrichtung zur Durchführung eines erfindungsgemäßen Verfahrens zur Montage eines Gasgenerators in einem Gehäuse;
- Figur 3 eine schematische Schnittansicht eines Abschnitts eines ersten Stempelwerkzeugs, das Teil der Vorrichtung aus Figur 2 ist;
- Figur 4 eine schematische Schnittansicht eines Abschnitts des Gehäuses und des Gasgenerators vor und nach dem ersten Umformschritt, der gemäß dem erfindungsgemäßen Verfahren in der erfindungsgemäßen Vorrichtung durchgeführt wird,
- Figur 5 eine schematische Schnittansicht eines Abschnitts eines zweiten Stempelwerkzeugs, das Teil der Vorrichtung aus Figur 2 ist; und
- Figur 6 eine schematische Schnittansicht eines Abschnitts des Gehäuses und des Gasgenerators nach dem zweiten Umformschritt des erfindungsgemäßen Verfahrens in der erfindungsgemäßen Vorrichtung.

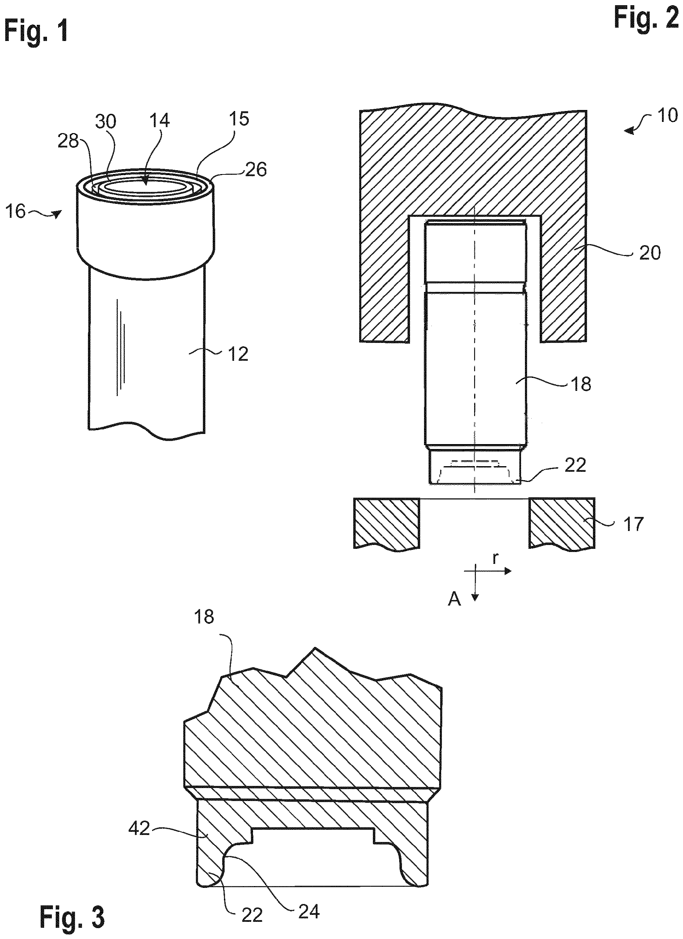

Figur 1 zeigt in schematischer Darstellung eine Baugruppe aus einem Gehäuse 12 und einem darin fest fixierten Gasgenerator 14.

Figur 2 zeigt eine Vorrichtung 10 zur Durchführung eines Verfahrens zur Montage des Gasgenerators 14 im Gehäuse 12.

Das Gehäuse 12 ist hier rohrförmig gestaltet und ist insbesondere ein Strafferrohr eines Gurtstraffers. Bei dem Gasgenerator 14 handelt es sich hier um einen Mikrogasgenerator, der ein Gasvolumen zum Antrieb des Gurtstraffers, zu dem das Strafferrohr gehört, liefert. Natürlich kann das Gehäuse 12 auch für einen anderen Anwendungszweck ausgelegt sein.

Der Gasgenerator 14 ist in eine Öffnung 15 an einem offenen Einsteckende 16 des rohrförmigen Gehäuses 12 eingesetzt. In axialer Richtung A kann der Gasgenerator 14 an seinem unteren Ende an einer entsprechenden Verjüngung (nicht dargestellt) im Innenquerschnitt des Gehäuses 12 anliegen und somit in axialer Richtung nach unten (gemäß der Anordnung in Figur 1) unverschiebbar aufgenommen sein.

Um den Gasgenerator 14 an seinem zum freien Einsteckende 16 des Rohrs gerichteten Ende fest mit dem Gehäuse 12 zu verbinden, wird das Gehäuse 12 mit eingeschobenem Gasgenerator 14 in die Vorrichtung 10 eingesetzt.

Hierzu ist ein in Figur 2 schematisch angedeuteter Halter 17 vorgesehen, der das Gehäuse 12 in allen Richtungen fixiert.

Ein erstes Stempelwerkzeug 18 ist austauschbar in einer Halterung 20 der Vorrichtung 10 aufgenommen (schematisch in Figur 2).

Figur 3 zeigt das freie Ende des ersten Stempelwerkzeugs 18, das einen ersten axial vorstehenden, in Umfangsrichtung umlaufenden Vorsprung 22 aufweist, der hier den in Axialrichtung A am weitesten vorstehenden Abschnitt des ersten Stempelwerkzeugs 18 bildet.

An der radialen Innenseite des ersten Vorsprungs 22 ist eine Kontaktfläche 24 ausgebildet, die in Kontakt mit dem Gehäuse 12 kommt. Innerhalb des Vorsprungs 22 ist die Fläche des ersten Stempelwerkzeugs 18 in Axialrichtung A zurückgesetzt, sodass diese nicht in Kontakt mit dem Gehäuse 12 und dem Gasgenerator 14 kommt.

Das erste Stempelwerkzeug 18 wird in Axialrichtung A in der Vorrichtung 10 in einem ersten Umformschritt verfahren und formt dabei das Gehäuse 12 in axialer und radialer Richtung stauchend um. Es ist möglich, den Umformprozess zu überwachen und insbesondere das erste Stempelwerkzeug kraft- oder weggesteuert zu verfahren.

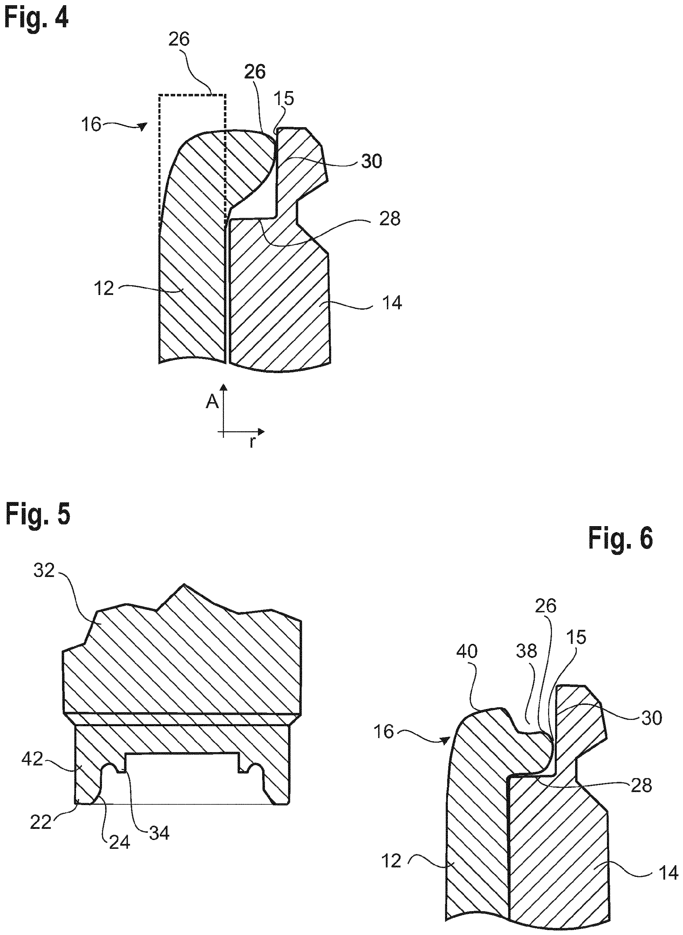

Figur 4 zeigt schematisch einen Schnitt durch das Gehäuse 12 mit darin eingesetztem Gasgenerator 14, wobei nur eine radiale Hälfte des Gasgenerators 14 und des Gehäuses 12 dargestellt sind. Die andere Hälfte ist natürlich spiegelbildlich zur gezeigten Abbildung und wird in identischer Weise bearbeitet.

In gestrichelten Linien ist das Gehäuse 12 vor dem ersten Umformschritt dargestellt.

Wie in Figur 4 auch zu erkennen ist, weist der dargestellte Gasgenerator 14 an seinem zum Einsteckende 16 hin gerichteten Ende eine umlaufende Schulter 28 auf, die hier an der radialen Außenfläche des Gasgenerators 14 endet und die dort in einen Abschnitt 30 mit verringertem Durchmesser übergeht, die am zum Einsteckende 16 gerichteten Ende des Gasgenerators 14 liegt.

Durch das erste Stempelwerkzeug 18, insbesondere durch dessen ersten Vorsprung 22, wird der Rand 26 der Öffnung 15 im Gehäuse 12 axial und radial zum Gasgenerator 14 hin umgeformt.

Der Rand 26 der Öffnung 15 des Gehäuses 12 wird dabei so verformt, dass er die Schulter 28 übergreift und beispielsweise am Abschnitt 30 anliegt. Diese Situation nach dem ersten Umformschritt mit dem ersten Stempelwerkzeug 18 ist in Figur 4 in durchgezogenen Linien gezeigt.

Nach dem ersten Umformschritt wird in der Vorrichtung 10 ein zweiter Umformschritt mit einem zweiten Stempelwerkzeug 32 durchgeführt, das in Figur 5 dargestellt ist.

Das zweite Stempelwerkzeug 32 kann in der Vorrichtung 10 gegen das erste Stempelwerkzeug 18 ausgetauscht werden oder kann zusätzlich zu diesem dort vorgesehen sein.

In diesem Ausführungsbeispiel unterscheiden sich das erste Stempelwerkzeug 18 und das zweite Stempelwerkzeug 32 nur durch einen zweiten umfangsmäßig umlaufenden axial vorstehenden Vorsprung 34, der radial innerhalb des ersten Vorsprungs 22 angeordnet ist. In diesem Beispiel ist der zweite Vorsprung 34 auch in Axialrichtung A ein Stück gegenüber dem ersten Vorsprung 22 zurückgesetzt, kommt also bei einem Verfahren des zweiten Stempelwerkzeugs 32 in Axialrichtung A erst nach dem ersten Vorsprung 22 in Kontakt mit dem Gehäuse 12.

Im zweiten Umformschritt kann das zweite Stempelwerkzeug 32 um dieselbe Wegstrecke verfahren werden wie das erste Stempelwerkzeug 18 im ersten Umformschritt. Der erste Vorsprung 22 bewirkt dabei im Wesentlichen keine Umformung des Gehäuses 12 mehr. Auch im zweiten Umformschritt wird das zweite Stempelwerkzeug 32 nur in Axialrichtung A verfahren.

Der zweite Vorsprung 34 staucht jedoch das Material des Gehäuses 12 am Rand 26 der Öffnung 15 und verschiebt es in axialer Richtung A und/oder in radialer Richtung r zum Gasgenerator 14 hin.

Wie Figur 6 zeigt, nimmt die Innenseite des Gehäuses 12 in etwa die Kontur der Schulter 28 sowie des Abschnitts 30 des Gasgenerators 14 an und kann insbesondere den Übergang zwischen der Schulter 28 und dem Abschnitt 30 im Wesentlichen ausfüllen und sowohl an der Schulter 28 als auch am Abschnitt 30 des Gasgenerators 14 anliegen.

An der Stirnfläche der Baugruppe aus Gehäuse 12 und Gasgenerator 14 ist in diesem Beispiel zwischen einer Gehäusefläche 40, die den Rand 26 der Öffnung 15 umgibt, und dem Abschnitt 30 des Gasgenerators 14 eine Nut 38, die durch die Einwirkung des zweiten Vorsprungs 34 im zweiten Umformschritt erzeugt wird.

Beide Stempelwerkzeuge 18, 32 treffen im Umformschritt so auf den Rand 26 der Öffnung 15 des Gehäuses 12 auf, dass der erste Vorsprung 22 bzw. der zweite Vorsprung 34 auf ganzer Umfangslänge gleichzeitig mit dem Gehäuse 12 in Kontakt kommen.

Ein radial äußerer Abschnitt 42 des ersten Vorsprungs 22, der in Radialrichtung der Kontaktfläche 24 gegenüberliegt, sorgt während beider Umformschritte dafür, dass das Material des Gehäuses 12 nicht radial nach außen ausweichen kann, sondern vollständig zum Gasgenerator 14 hin umgeformt wird.

Die hier gezeigte Geometrie des ersten und des zweiten Stempelwerkzeugs 18, 32 ist nur beispielhaft gewählt und kann im Ermessen des Fachmanns an die jeweilige Geometrie von Gehäuse 12 und Gasgenerator 14 angepasst werden. In diesem Beispiel ist die Außenkontur sowohl des Gehäuses 12 als auch des Gasgenerators 14 kreisrund, aber es können natürlich beliebige Konturen gewählt werden.

Bei der Montage des Gasgenerators 14 im Gehäuse 12 kann die Baugruppe in der Vorrichtung 10 verbleiben, während das erste Stempelwerkzeug 18 gegen das zweite Stempelwerkzeug 32 ausgetauscht wird. Es ist aber auch möglich, die Baugruppe aus Gehäuse 12 und Gasgenerator 14 zunächst aus der Vorrichtung 10 zu entnehmen, da nach dem ersten Umformschritt der Gasgenerator 14 bereits am Gehäuse 12 fixiert ist. In diesem Fall wird das erste Stempelwerkzeug 18 gegen das zweite Stempelwerkzeug 32 erst ausgetauscht, wenn eine gewisse Anzahl von Baugruppen aus Gehäuse 12 und Gasgenerator 14 in der Vorrichtung 10 nacheinander mit dem ersten Stempelwerkzeug 18 im ersten Umformschritt bearbeitet wurden.

## Patentansprüche

1. Verfahren zur Montage eines Gasgenerators (14) in einem Gehäuse (12), mit den Schritten:
- Einschieben des Gasgenerators (14) in eine Öffnung (15) des Gehäuses (12),
- Umformen eines Randes (26) der Öffnung (15) des Gehäuses (12) axial und radial in Richtung zum Gasgenerator (14) in einem ersten Umformschritt, und
- weiteres Umformen des Randes (26) der Öffnung (15) des Gehäuses (12) zumindest axial in Richtung zum Gasgenerator (14) in einem separaten zweiten Umformschritt.

2. Verfahren nach Anspruch 1, **dadurch gekennzeichnet, dass** der erste Umformschritt mit einem ersten Stempelwerkzeug (18) und der zweite Umformschritt mit einem zweiten Stempelwerkzeug (32) durchgeführt wird.

3. Verfahren nach Anspruch 2, **dadurch gekennzeichnet, dass** beide Umformschritte in derselben Vorrichtung (10) mit unterschiedlichen Stempelwerkzeugen (18, 32) durchgeführt werden, wobei insbesondere zwischen den Umformschritten das Stempelwerkzeug (18, 32) ausgetauscht wird oder die Vorrichtung für die unterschiedlichen Stempelwerkzeuge (18, 32) separate Werkzeugaufnahmen umfasst.

4. Verfahren nach einem der vorhergehenden Ansprüche, **dadurch gekennzeichnet, dass** das Stempelwerkzeug (18, 32) in beiden Umformschritten jeweils nur in axialer Richtung (A) verfahren wird.

5. Verfahren nach einem der vorhergehenden Ansprüche, **dadurch gekennzeichnet, dass** ein Umfangsrand des Gasgenerators (14) eine umlaufende, im Wesentlichen radiale Schulter (28) aufweist und der Rand (26) der Öffnung (15) des Gehäuses (12) im zweiten Umformschritt so verformt wird, dass der Rand (26) der Öffnung (15) die Schulter (28) in Radialrichtung (r) übergreift und insbesondere an dieser flächig anliegt.

6. Verfahren nach Anspruch 5, **dadurch gekennzeichnet, dass** im ersten Umformschritt der Rand (26) der Öffnung (15) des Gehäuses (12) gegen einen von der Schulter (28) ausgehenden Abschnitt (30) des Gasgenerators (14) mit verringertem Querschnitt gedrückt wird.

7. Verfahren nach einem der vorhergehenden Ansprüche, **dadurch gekennzeichnet, dass** im zweiten Umformschritt der Rand (26) der Öffnung (15) des Gehäuses (12) weiter radial einwärts verformt wird als im ersten Umformschritt.

8. Verfahren nach einem der vorhergehenden Ansprüche, **dadurch gekennzeichnet, dass** das Gehäuse (12) vor dem Umformen rohrförmig ausgebildet ist, und ein offenes Einsteckende (16) mit der Öffnung (15) aufweist sowie einen Boden oder eine Verjüngung, an dem/der insbesondere der Gasgenerator (14) anliegt.

9. Vorrichtung zur Montage eines Gasgenerators (14) in einem Gehäuse (12), der in eine Öffnung (15) des Gehäuses (12) eingesetzt ist, mit einem ersten Stempelwerkzeug (18), das so ausgebildet ist, dass es in einem ersten Umformschritt einen Rand (26) der Öffnung (15) des Gehäuses (12) in axialer und in radialer Richtung (A, r) zum Gasgenerator (14) hin umformt, und mit einem zweiten, in seiner Form vom ersten Stempelwerkzeug (18) verschiedenen Stempelwerkzeug (32), das so ausgebildet ist, dass es in einem zweiten Umformschritt den Rand (26) der Öffnung (15) des Gehäuses (12) zumindest in axialer Richtung (A) zum Gasgenerator (14) hin umformt.

10. Vorrichtung nach Anspruch 9, **dadurch gekennzeichnet, dass** zumindest das erste Stempelwerkzeug (18) einen ersten axial vorstehenden, in Umfangsrichtung umlaufenden Vorsprung (22) hat, an dessen radialer Innenseite eine Kontaktfläche (24) ausgebildet ist, die während des Umformschritts mit dem Gehäuse (12) in Kontakt kommt.

11. Vorrichtung nach Anspruch 10, **dadurch gekennzeichnet, dass** das zweite Stempelwerkzeug (32) so ausgebildet ist, dass es einen zweiten umfangsmäßig umlaufenden Vorsprung (34) aufweist, der weiter radial innen liegt als der erste Vorsprung (22) und der insbesondere beim ersten Stempelwerkzeug (18) nicht vorhanden ist.

12. Vorrichtung nach Anspruch 11, **dadurch gekennzeichnet, dass** sich das erste und das zweite Stempelwerkzeug (18, 32) im Wesentlichen nur durch den zweiten Vorsprung (34) unterscheiden.

13. Baugruppe aus Gasgenerator (14) und Gehäuse (12), insbesondere Gurtstraffer, hergestellt nach einem Verfahren der Ansprüche 1 bis 8.
